# EUROPÄISCHE PATENTSCHRIFT

(11) **EP 1 360 044 B1**
(45) Veröffentlichungstag und Bekanntmachung des Hinweises auf die Patenterteilung: **10.11.2004**
(21) Anmeldenummer: 02708174.4
(22) Anmeldetag: 28.01.2002
(51) Int. Cl.: B26D 7/18

(54) **SPANABSAUGVORRICHTUNG FÜR EINE LANGSSCHNEIDEINRICHTUNG**
CHIP SUCTIONING DEVICE FOR A LONGITUDINAL CUTTING DEVICE
DISPOSITIF D'ASPIRATION DE COPEAUX POUR DISPOSITIF DE COUPE LONGITUDINALE

(30) Priorität: 14.02.2001 DE 10106672
(43) Veröffentlichungstag der Anmeldung: 12.11.2003
(73) Patentinhaber: Koenig & Bauer Aktiengesellschaft, 97080 Würzburg (DE)
(72) Erfinder: MICHALIK, Horst, Bernhard, 97204 Höchberg (DE)
(74) Vertreter: Stiel, Jürgen
(86) Internationale Anmeldenummer: PCT/DE2002/000274
(87) Internationale Veröffentlichungsnummer: WO 2002/064333

(56) Entgegenhaltungen:
- EP-A- 0 183 863
- EP-A- 0 887 160
- WO-A-00/38894
- DE-A- 3 807 279
- DE-A- 4 021 573
- DE-C- 631 858
- US-A- 4 896 572

## Beschreibung

Die Erfindung betrifft eine Längsschneideinrichtung gemäß dem Oberbegriff des Anspruchs 1.

Bekannte Längsschneideinrichtungen umfassen häufig eine Mehrzahl von Schneidelementen, die jeweils einen Längsschnitt in einer Ausgangs-Materialbahn bilden. Jedes dieser Schneidelemente ist eine Quelle von Spänen oder Staub, die beseitigt werden müssen, um ein einwandfreies, wartungsarmes Funktionieren der Längsschneideinrichtung zu garantieren und Störungen des Druckprozesses durch Verunreinigungen der Druckplatten und Drucktücher zu verhindern.

Um Späne von einer Vielzahl von Schneidelementen gleichzeitig absaugen zu können, wird eine Unterdruckquelle mit einer hohen Saugleistung benötigt, die ausreichen muss, um an jedem Schneidelement den Spananfall im wesentlichen vollständig abzusaugen. Eine solche Unterdruckquelle ist kostspielig in der Anschaffung und hat einen erheblichen Energieverbrauch. Die mit dem Betrieb einer solchen Unterdruckquelle verbundenen Luftbewegungen können zu Zugerscheinungen führen, die nicht nur von dem in der Nähe der Längsschneideinrichtung beschäftigten Personal als unangenehm empfunden werden können, sondern insbesondere bei Anwendung in Verbindung mit Druckmaschinen zu einer Störung des Feuchtegleichgewichts in diesen Maschinen und damit zu einer Beeinträchtigung des Druckergebnisses führen können. Um solche Zugerscheinungen in Grenzen zu halten, ist bekannt, die Abluft einer solchen Spanabsaugvorrichtung ins Freie abzuführen. Um dies zu ermöglichen, müssen in vielen Fällen aufwendige Rohrleitungssysteme installiert und Mauerdurchbrüche in diesem Gebäude geschaffen werden, in dem eine solche Längsschneideinrichtung betrieben wird. Rollenrotationsmaschinen stehen vorwiegend in Räumen, in welchen die Luftfeuchtigkeit und die Temperatur der Umluft geregelt werden. Wird die Abluft der Absaugung ins Freie geführt, so muß die Klimaanlage verstärkt ausgeführt werden. Diese Maßnahmen und die ihnen vorangehende Planung sind mit erheblichen Kosten verbunden.

Die DE 631 858 beschreibt eine Schneideinrichtung, bei der ein Abstreifer mit einer Saugeinrichtung zusammenwirkt.

Die WO 00/38894 A1 zeigt eine Längsschneideinrichtung, bei der zwischen jedem Absaugrohr und der Unterdruckquelle ein Regelventil angeordnet ist.

Die DE 38 07 279 A1 offenbart eine Schadstoffabsaugeinrichtung mit mindestens zwei Schadstofferfassungsstellen. Die Schadstofferfassungsquellen sind wahlweise an einen Ventilator anschließbar.

Der Erfindung liegt die Aufgabe zugrunde, eine Längsschneideinrichtung zu schaffen.

Diese Aufgabe wird erfindungsgemäß durch die Merkmale des Anspruchs 1 gelöst.

Die mit der Erfindung erzielbaren Vorteile bestehen darin, dass für die Spanabsaugvorrichtung nur eine Unterdruckquelle mit einer geringen Saugleistung benötigt wird, die preiswert in der Anschaffung und im Betrieb ist, die geräuschärmer als eine herkömmliche, leistungsstarke Unterdruckquelle arbeiten kann, und die störende Luftbewegungen in der Umgebung der Spanabsaugvorrichtung bzw. der Längsschneideinrichtung reduziert.

Da die Spanabsaugvorrichtung mit einer geringen Saugleistung auskommt, erzeugt sie auch nur einen schwachen Abluftstrom, der über einen Filter in den gleichen Raum abgegeben werden kann, in dem sich auch die Längsschneideinrichtung befindet.

Deshalb erfordert die Spanabsaugvorrichtung nur einen geringen Planungs- und Installationsaufwand.

Indem bei der Spanabsaugvorrichtung zu jedem Zeitpunkt jeweils nur ein Teil der Absaugstutzen über die Ventilanordnung mit der Unterdruckquelle kommuniziert, kann diese mit einer relativ geringen Saugleistung eine Strömungsgeschwindigkeit im Bereich der jeweils kommunizierenden Absaugstutzen erreichen, mit der frei werdende Späne zuverlässig erfasst und abgesaugt werden können.

Späne, die im Bereich von Schneidelementen frei werden, deren zugeordneter Absaugstutzen nicht mit der Unterdruckquelle kommuniziert, bleiben in der Nähe des Schneidelements im Absaugstutzen liegen, bis nach einer turnusmäßigen Umschaltung der Ventilanordnung auch diese Absaugstutzen wieder zeitweilig mit der Unterdruckquelle kommunizieren.

Um eine gleichmäßige Verteilung der Absaugleistung auf die verschiedenen Absaugstutzen zu erreichen, ist vorzugsweise die Ventilanordnung so ausgelegt, dass in jedem ihrer Schaltzustände eine gleiche Zahl von Absaugstutzen mit der Unterdruckquelle kommuniziert. Diese Zahl kann insbesondere 1 sein.

Vorzugsweise ist jeder Absaugstutzen genau einem Schneidelement zugeordnet. Dies erlaubt es, die Absaugstutzen klein und passend zu den Abmessungen der Schneidelemente zu dimensionieren, so dass auch bei mäßiger Absaugleistung der Unterdruckquelle im Bereich der Schneidelemente für eine vollständige Absaugung anfallender Späne hinreichende Strömungsgeschwindigkeiten erzielt werden.

Typischerweise ist eine Längsschneideinrichtung aufgebaut aus einer Mehrzahl von auf einer gemeinsamen Welle drehbar angeordnete Messern, insbesondere Untermesser, die jeweils eine die Schneidkante des Schneidmessers aufnehmende Schneidnut umfassen, und diesen gegenüberliegenden Messern, insbesondere Kreismesser. Bei einer solchen Längsschneideinrichtung ist vorzugsweise jeder Absaugstutzen jeweils unter einem Untermesser angeordnet und bildet in nicht mit der Unterdruckquelle kommunizierendem Zustand einen Auffangbehälter für Späne.

An der dem Schneidelement bzw. genauer gesagt der Schneidnut zugewandten Mündung des Absaugstutzens ist vorzugsweise ein über diese Mündung überstehendes Abstreifelement angeordnet, dessen Form so gewählt ist, dass es in die Schneidnut eingreifen und darin festsitzende Späne herausdrängen kann.

Um die Absaugstutzen jeweils im Wechsel mit der Unterdruckquelle in Kommunikation zu setzen, ist zweckmäßigerweise eine Steuereinrichtung für die Spanabsaugvorrichtung vorgesehen. Diese kann in einfacher Weise zeitgesteuert arbeiten; denkbar ist jedoch auch z. B. eine Erfassung des Staubanfalls an den einzelnen Schneidelementen und eine Steuerung der Kommunikation der zugeordneten Absaugstutzen mit der Unterdruckquelle in Abhängigkeit von dem erfassten Späneanfall.

Die Ventilanordnung kann eine Mehrzahl von Sperrschiebern oder Klappen jeweils zum Freigeben oder Sperren der Kommunikation eines Absaugstutzen mit der Unterdruckquelle aufweisen.

Alternativ besteht die Möglichkeit, die Ventilanordnung als einen zylindrischen Hohlraum mit einer Mehrzahl von an dessen Umfang verteilten Einlassöffnungen und einer Auslassöffnung und mit einer in dem Hohlraum drehbaren zylindrischen Hülse auszubilden, wobei die Hülse eine Durchbrechung aufweist, die im Laufe einer Umdrehung sich sukzessive mit den Einlassöffnungen überschneidet und so alle Einlassöffnungen bzw. daran angeschlossene Absaugstutzen im Wechsel mit der Unterdruckquelle in Kommunikation bringt.

Vorzugsweise ist die Hülse in einer Mehrzahl von Positionen verrastbar, die jeweils der Überschneidung der Durchbrechung mit wenigstens einer Einlassöffnung entsprechen, und sie ist mit einem Motor zum Antreiben der Drehbewegung der Hülse über eine Feder gekoppelt. Diese Feder übt ein mit einer kontinuierlichen Drehung des Motors stetig wachsendes Drehmoment auf die Hülse aus und bewirkt ein Weiterschalten der Hülse in eine andere Position, sobald das Drehmoment der Feder gross genug ist, um den Verrastungswiderstand zu überwinden.

Ausführungsbeispiele der Erfindung sind in den Zeichnungen dargestellt und werden im folgenden näher beschrieben.

Es zeigen:
- Fig. 1: eine schematisierte Darstellung der Komponenten einer Spanabsaugvorrichtung;
- Fig. 2: eine Ansicht eines Astes der Spanabsaugvorrichtung aus Fig. 1;
- Fig. 3: ein Schneidelement einer Längsschneideinrichtung mit einem zugeordneten Absaugstutzen der Spanabsaugvorrichtung in einem Schnitt;
- Fig. 4: eine Ventilanordnung der Absaugvorrichtung im Querschnitt;
- Fig. 5: eine Variante der Ventilanordnung in einem Längsschnitt.

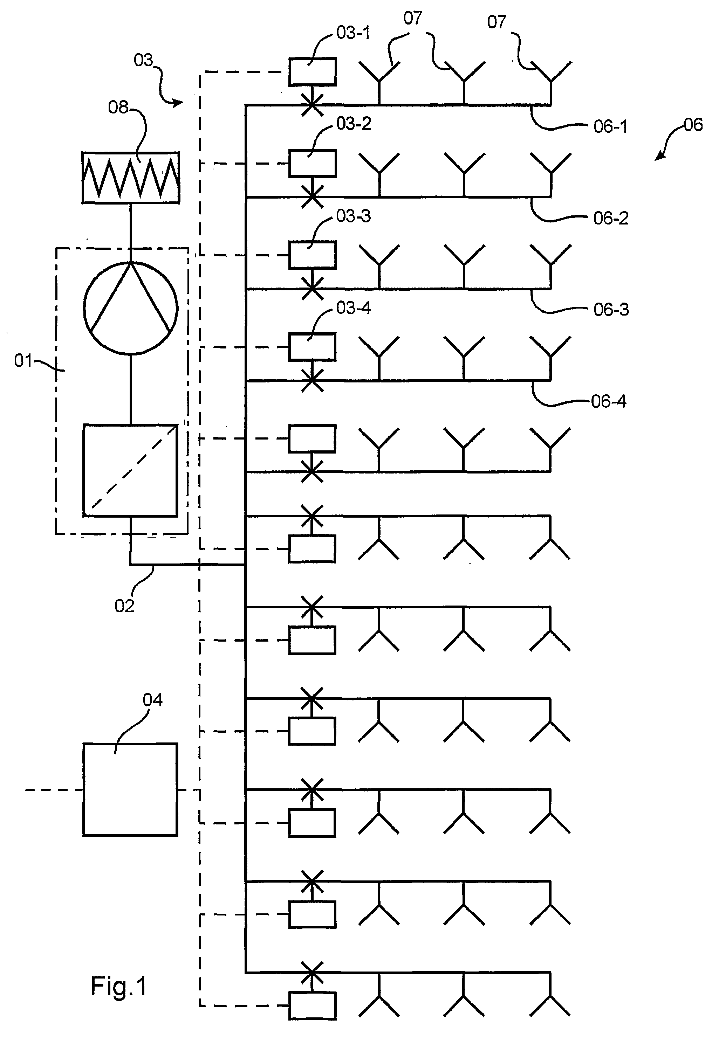

Fig. 1 zeigt in einer stark schematisierten Darstellung den Aufbau einer Spanabsaugvorrichtung in Verbindung mit einer Mehrzahl von Längsschneideinrichtungen, die z. B. jeweils einzeln im Anschluss an eine Rotationsdruckmaschine angeordnet sein können, um eine von der Druckmaschine bedruckte Bahn, insbesondere eine Papierbahn, in Teilbahnen zu zerschneiden, oder die auch zu mehreren im Anschluss an eine einzelne Druckmaschine an Verarbeitungswegen angeordnet sein können, über die eine von der Maschine bedruckte Bahn wahlweise führbar ist: Die Spanabsaugvorrichtung umfasst eine Unterdruckquelle 01 in Form einer Saugpumpe, die über eine Sammelleitung 02 mit einer Ventilanordnung 03 verbunden ist, die in der Fig. 1 als eine Vielzahl von Einzelventilen in Gestalt von Sperrschiebern 03-1; 03-2; 03-3; 03-4 dargestellt ist. Der Zustand offen oder geschlossen der einzelnen Sperrschieber 03-1; 03-2; 03-3; 03-4 ist über eine Steuereinrichtung 04 elektrisch gesteuert.

An die Sperrschieber 03-1; 03-2; 03-3; 03-4 sind jeweils Zweigleitungen 06-1; 06-2; 06-3; 06-4 angeschlossen, an denen jeweils eine vorgegebene Zahl von Absaugstutzen 07, hier jeweils drei Stück, angeschlossen sind.

Die Steuereinrichtung 04 steuert den Zustand der Ventilanordnung 03 so, dass zu einem gegebenen Zeitpunkt jeweils nur einer der Sperrschieber 03-1; 03-2; 03-3; 03-4 offen ist. Die Saugleistung der Unterdruckquelle 01 steht somit der Zweigleitung 06-1; 06-2; 06-3; 06-4 des offenen Sperrschiebers 03-1; 03-2; 03-3; 03-4 voll zur Verfügung, an den anderen Zweigleitungen 06-1; 06-2; 06-3; 06-4 findet zur gleichen Zeit keine Absaugung statt. Es liegt auf der Hand, dass auf diese Weise an der Zweigleitung 06-1; 06-2; 06-3; 06-4, deren Sperrschieber 03-1; 03-2; 03-3; 03-4 offen ist, eine wirksame Spanabsaugung aus der Umgebung der Absaugstutzen 07 mit einer wesentlich geringeren Saugleistung der Saugpumpe möglich ist, als wenn die Ventilanordnung 03 fehlen würde und alle Absaugstutzen 07 gleichzeitig mit der Unterdruckquelle 01 kommunizierten.

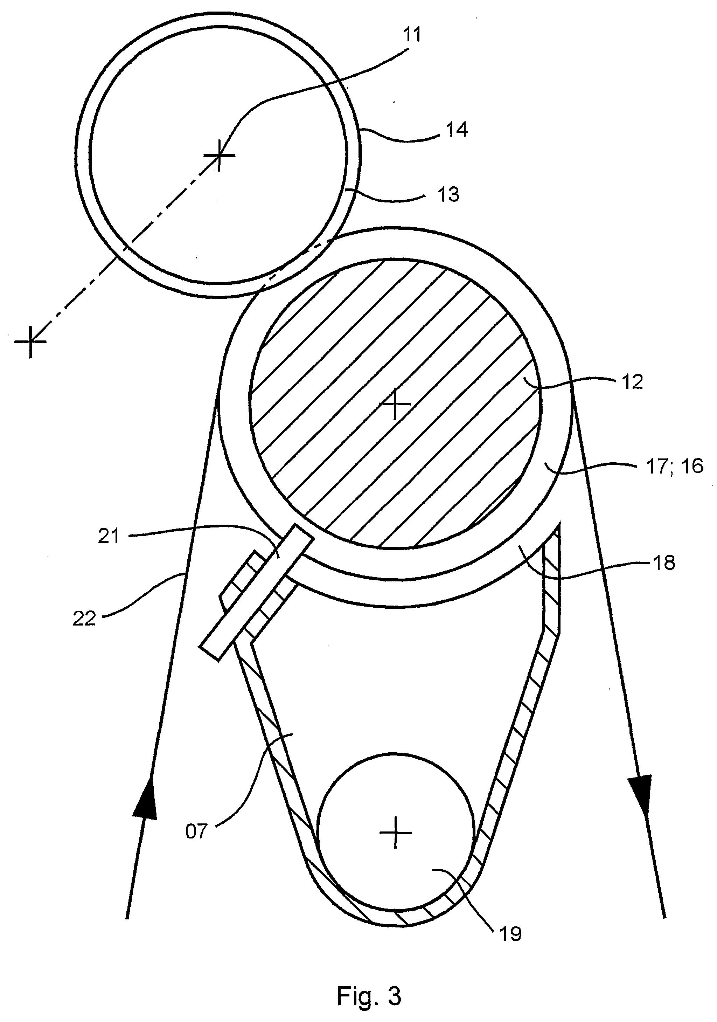

Deshalb kann die von der Unterdruckquelle 01 abgesaugte Luft über einen Filter 08, der die abgesaugten Teilchen zurückhält, direkt wieder in den gleichen Raum abgegeben werden, in dem die Schneideinrichtung aufgestellt ist, ohne dass dies zu übermäßigen Zugerscheinungen führt. Nach einer vorgegebenen Zeitspanne von z. B. ca. 5 Minuten pro Sperrschieber 03-1; 03-2; 03-3; 03-4 schließt die Steuereinrichtung 04 den geöffneten Sperrschieber 03-1; 03-2; 03-3;-03-4-und öffnet einen anderen, so dass alle Sperrschieber 03-1; 03-2; 03-3; 03-4 der Ventilanordnung 03 periodisch geöffnet werden. Dabei ist die Periode so bemessen, dass die Absaugstutzen 07, deren Aufbau im folgenden mit Bezug auf Fig. 3 noch erläutert wird, in der Lage sind, in ihrer Umgebung entstehende Späne aufzufangen und so lange zurückzuhalten, bis der dem betreffenden Absaugstutzen 07 zugeordnete Sperrschieber 03-1; 03-2; 03-3; 03-4 erneut geöffnet wird und die Späne so abgesaugt werden.

Wenn die Längsschneideinrichtungen, an denen die Zweigleitungen 06 angeordnet sind, alle gleichzeitig in Betrieb sind, werden im Laufe eines Betriebszyklus der Steuereinrichtung 04 alle Sperrschieber 03-1; 03-2; 03-3; 03-4 der Ventilanordnung 03 sukzessive geöffnet und geschlossen. Wenn die Schneideinrichtungen hingegen an Verarbeitungsstrecken angeordnet sind, die nicht gleichzeitig, sondern alternativ genutzt werden, so kann der Betriebszyklus der Steuereinrichtung 04 dahingehend angepasst werden, dass die Sperrschieber 03-1; 03-2; 03-3; 03-4 von Zweigleitungen 06-1; 06-2; 06-3; 06-4 an ungenutzten Schneideinrichtungen permanent geschlossen bleiben und die anderen Zweigleitungen 06-1; 06-2; 06-3; 06-4 dementsprechend häufiger abgesaugt werden.

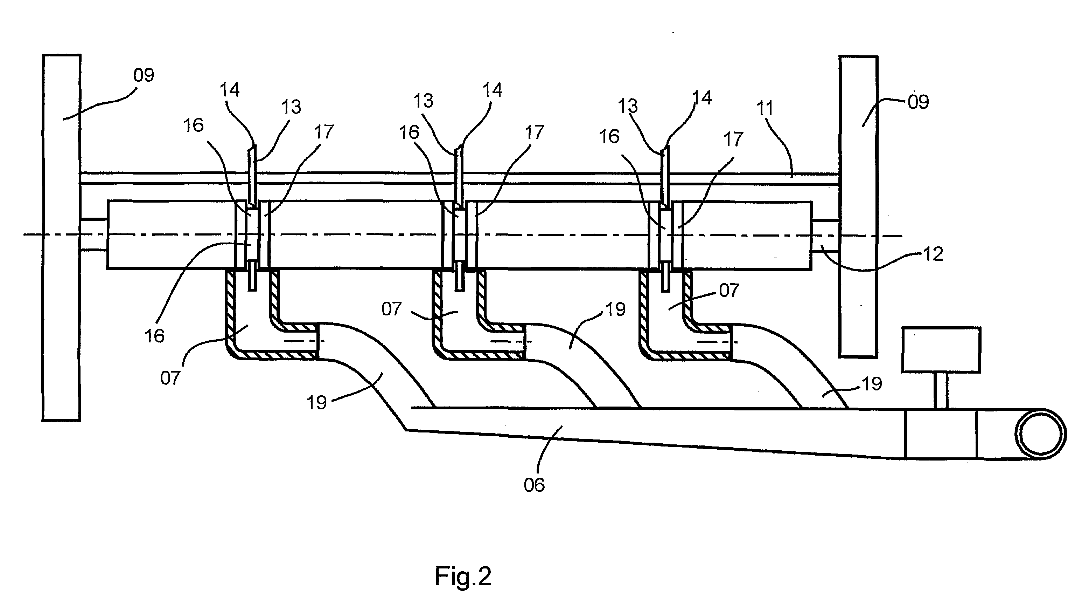

Fig. 2 zeigt eine Ansicht einer Längsschneideinrichtung für eine Materialbahn, insbesondere eine Papierbahn, die mit einer Spanabsaugvorrichtung ausgestattet ist. Die Längsschneideinrichtung umfasst im wesentlichen zwei drehbare Wellen 11; 12, die zwischen zwei Seitenplatten 9 gelagert sind. Die Welle 11 trägt eine Mehrzahl von Kreismessern 13, deren Schneidkanten 14 eine zur Achse der Welle 11 parallele Flanke und eine schräg zur Achse verlaufende, kegelstumpfförmige Flanke aufweisen. Die Schneidkanten 14 der Kreismesser 13 greifen jeweils in Nuten 16 von Untermessern 17 ein, die an der Welle 12 angeordnet sind. Die Position der Kreismesser 13 und der Untermesser 17 in Längsrichtung ihrer Wellen 11 bzw. 12 sowie die Zahl der Kreismesser 13 und Untermesser 17 kann in Anpassung an einen momentanen Bedarf veränderbar sein.

Die Untermesser 17 aufweisende Welle 12 ist vorzugsweise als Leitwalze 12 ausgebildet.

Im Betrieb der Längsschneideinrichtung wird, wie in Fig. 3 gezeigt, eine zu schneidende Materialbahn 22 über die Welle 12 der Untermesser 17 geführt und an dieser Welle 12 umgelenkt. Beim Schneiden freiwerdende Späne werden von den Schneidkanten 14 der Kreismesser 13 im wesentlichen in die Nuten 16 der Untermesser 17 gedrückt und bleiben darin zurück, wenn sich die geschnittene Materialbahn 22 wieder von der Welle 12 trennt. Um diese Späne zu beseitigen, ist lotrecht unterhalb eines Untermessers 17 jeweils ein Absaugstutzen 07 angeordnet.

Fig. 3 zeigt einen solchen Absaugstutzen 07 und die Wellen 11; 12 der Schneideinrichtung in einem Schnitt senkrecht zur Achse der Wellen. Der Absaugstutzen 07 ist trichterartig geformt, mit einer zum Untermesser 17 hin offenen Mündung 18, deren Rand mit einem geringen Abstand dem Außenumfang des Untermessers 17 folgt. Nach unten hin verjüngt sich der Absaugstutzen 07 zu einer Rohrleitung 19 hin, die ihn mit der Zweigleitung 06 verbindet. Wenn die Position der Messer 13; 17 fest ist, kann die Rohrleitung 19 in sich steif sein; bei einer Schneideinrichtung, bei der die Position der Messer 13; 17 variabel ist, besteht die Rohrleitung 19 zweckmäßigerweise aus einem flexiblen Material, so dass die Position jedes Absaugstutzens 07 entlang der Welle 12 passend zur Position des zugehörigen Untermessers 17 einstellbar ist.

An der Wand des Absaugstutzen 07 in der Nähe der Mündung 18 ist ein Abstreifelement 21 angeordnet, dessen Breite mit einem möglichst geringen Spiel der Breite der Nut 16 entspricht, und das in die Nut 16 eingreift, um Materialspäne aus der Nut 16 zu verdrängen und diese so zu veranlassen, in den Absaugstutzen 07 zu fallen, selbst wenn dieser nicht abgesaugt wird, weil die Ventilanordnung 03 die Kommunikation des Absaugstutzen 07 mit der Unterdruckquelle 01 unterbricht.

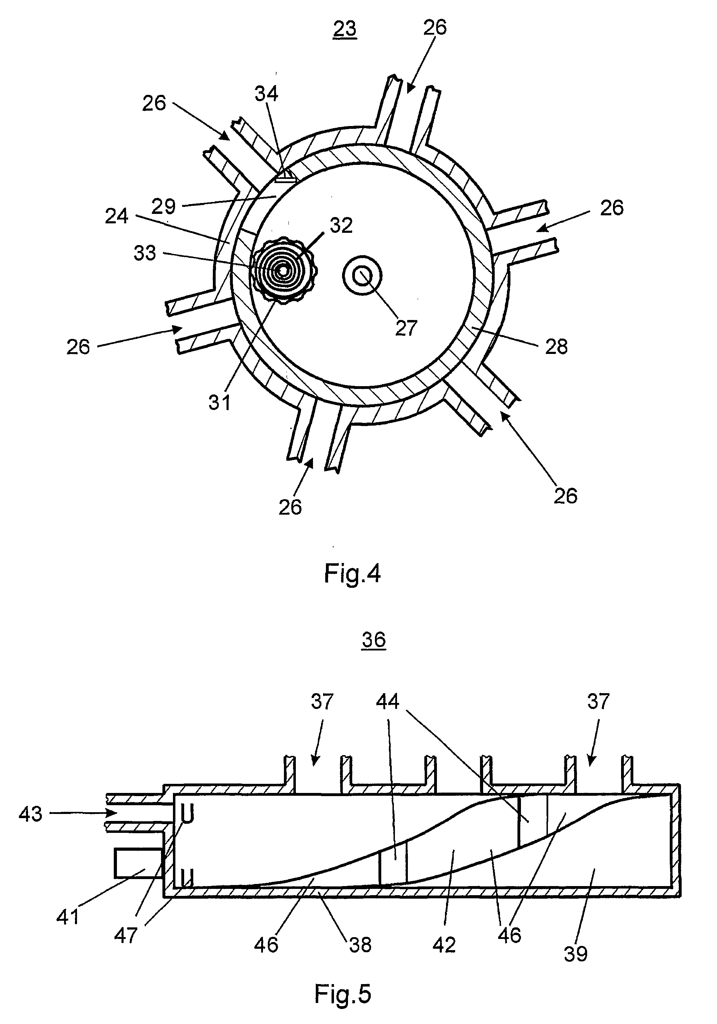

Fig. 4 zeigt eine alternative Ventilanordnung 23, bei der im Gegensatz zur oben beschriebenen.-Ventilanordnung 03 die Steuerung zum Teil auf mechanischen Prinzipien beruht. Die Ventilanordnung 23 umfasst ein im wesentlichen zylindrisches Gehäuse 24 mit einer Mehrzahl von Einlassöffnungen 26, die an der Umfangsfläche des zylindrischen Gehäuses 24 angeordnet sind und jeweils mit einer Zweigleitung 06 kommunizieren. Eine Auslassöffnung 27, die hier in einer Stirnseite des Gehäuses 24 angeordnet ist, kommuniziert mit der Unterdruckquelle 01. In dem zylindrischen Hohlraum des Gehäuses 24 ist eine Hülse 28 um die zur Ebene der Fig. 4 senkrechte Achse des Gehäuses 24 drehbar angeordnet. Die Aussenfläche der Hülse 28 liegt eng an der Innenfläche des Gehäuses 24 an, so dass alle Einlassöffnungen 26 mit Ausnahme einer Einlassöffnung 26, die mit einer Durchbrechung 29 der Hülse 28 fluchtet, im wesentlichen verschlossen sind. Die Durchbrechung 29 kann hier eine mit dem Querschnitt der Einlassöffnungen 26 im wesentlichen kongruente Bohrung sein.

Ein Zahnkranz an der Innenfläche der Hülse 28 kämmt mit einem Zahnrad 31, das über eine Spiralfeder 32 und eine Welle 33 an einen außerhalb des Gehäuses 24 angeordneten, nicht gezeigten, Motor gekoppelt ist. Dieser Motor treibt die Welle 33 zu einer kontinuierlichen Drehbewegung, hier im Uhrzeigersinn, an. Die Hülse 28 ist durch einen in eine Einlassöffnung 26 eingreifenden, elastisch biegsamen Arm 34 in ihrer gezeigten Stellung verrastet. Sie folgt daher dem über das Zahnrad 31 übertragenen Drehmoment der Feder 32 erst dann, wenn dieses groß genug ist, um den Arm 34 weit genug zurückzubiegen, so dass dieser aus der Einlassöffnung 26 ins Innere des Gehäuses 24 zurückweicht. Wenn der Arm 34 die im Uhrzeigersinn nachfolgende Einlassöffnung 26 erreicht, kehrt er in seine entspannte Stellung zurück, in der er in die Einlassöffnung 26 eingreift, wodurch die Hülse 28 bei nun entspannter Feder 32 wieder zur Ruhe kommt. Auf diese Weise setzt die Ventilanordnung 23 sukzessive und zyklisch alle Einlassöffnungen 26 in Kommunikation mit der Auslassöffnung 27 und der daran angeschlossenen Unterdruckquelle 01. Die Dauer des Zyklus einer solchen Ventilanordnung 23 bzw. der Phasen, in denen jeweils eine bestimmte Einlassöffnung 26 offen ist, hängt ab von den Eigenschaften der Spiralfeder 32 und des Arms 34 sowie der Drehgeschwindigkeit des Motors. Durch Regeln der Drehgeschwindigkeit läßt sich die Zyklusdauer auf einfache Weise steuern.

Fig. 5 zeigt eine gegenüber der Ausgestaltung aus Fig. 4 abgewandelte Ventilanordnung 36, bei der Einlassöffnungen 37 an einem langzylindrischen Gehäuse 38 in axialer Richtung nebeneinander angeordnet sind. Innerhalb des Gehäuses 38 ist eine Hülse 39 in analoger Weise wie mit Bezug auf Fig. 4 beschrieben drehbar und über einen Mechanismus mit einem Motor 41 und einer nicht gezeigten Feder schrittweise angetrieben untergebracht. Eine Durchbrechung 42 erstreckt sich schraubenlinienförmig über die gesamte Länge der Hülse 39 und beschreibt dabei eine vollständige Umdrehung um 360°. Je nach Drehstellung der Hülse 39 erlaubt die Durchbrechung 42 die Kommunikation einer der Einlassöffnungen 37 mit einer an der Stirnseite des Gehäuses 38 angeordneten, mit der Unterdruckquelle 01 verbundenen Auslassöffnung 43.

Um die Hülse 39 zu versteifen, kann die schraubenlinienförmige Durchbrechung 42 durch Streben 44 in eine Mehrzahl von Fenstern 46 unterteilt sein, von denen jedes einer Einlassöffnung 37 zugeordnet ist.

Um eine Verrastung in der Hülse 39 in verschiedenen Drehstellungen zu erreichen, in denen die Durchbrechung 42 jeweils einer Einlassöffnung 37 gegenüberliegt, sind flexible Rastzungen 47 in der Anzahl der Einlassöffnungen 37 entsprechender Zahl über den Umfang der Hülse 39 verteilt, die jeweils in komplementäre Aussparungen an der Innenfläche des Gehäuses 38 eingreifen.

Die mit Bezug auf Fig. 5 beschriebene Ausgestaltung der Ventilanordnung eignet sich insbesondere dazu, anstelle der Zweigleitung 06 in Fig. 2 unter der Welle 12 einer Längsschneideinrichtung angeordnet zu werden, wobei dann jeder Einlassöffnung 37 der Ventilanordnung 36 genau ein Absaugstutzen 07 zugeordnet ist. Auf diese Weise ist es möglich, selektiv an jedem aus Kreismesser 13 und Untermesser 17 bestehenden Schneidelement der Längsschneideinrichtung einzeln abzusaugen.

### Bezugszeichenliste

- 01: Unterdruckquelle
- 02: Sammelleitung
- 03: Ventilanordnung
- 04: Steuereinrichtung
- 05: -
- 06: Zweigleitung
- 07: Absaugstutzen
- 08: Filter
- 09: Seitenplatte
- 10: -
- 11: Welle
- 12: Welle, Leitwalze
- 13: Kreismesser
- 14: Schneidkante
- 15: -
- 16: Nut
- 17: Untermesser
- 18: Mündung
- 19: Rohrleitung
- 20: -
- 21: Abstreifelement
- 22: Materialbahn
- 23: Ventilanordnung
- 24: Gehäuse
- 25: -
- 26: Einlassöffnung
- 27: Auslassöffnung
- 28: Hülse
- 29: Durchbrechung
- 30: -
- 31: Zahnrad
- 32: Spiralfeder
- 33: Welle
- 34: Arm
- 35: -
- 36: Ventilanordnung
- 37: Einlassöffnung
- 38: Gehäuse
- 39: Hülse
- 40: -
- 41: Motor
- 42: Durchbrechung
- 43: Auslassöffnung
- 44: Strebe
- 45: -
- 46: Fenster
- 47: Rastzungen

- 03-1: Sperrschieber
- 03-2: Sperrschieber
- 03-3: Sperrschieber
- 03-4: Sperrschieber

- 06-1: Zweigleitung
- 06-2: Zweigleitung
- 06-3: Zweigleitung
- 06-4: Zweigleitung

## Patentansprüche

1. Längsschneideinrichtung mit einer Mehrzahl von Schneidelementen (13; 14) und einer Absaugvorrichtung, mit einer Mehrzahl von mit einer Unterdruckquelle (01) über Sammelleitungen (02) verbindbaren, den Schneidelementen (13; 14) zugeordneten Absaugstutzen (07), **dadurch gekennzeichnet, dass** jeder Absaugstutzen (07) jeweils unter einem Untermesser (17) angeordnet ist und in nicht mit der Unterdruckquelle (01) kommunizierendem Zustand einen Auffangbehälter für Späne bildet, dass Gruppen von Absaugstutzen (07) zyklisch mit der Unterdruckquelle (01) verbunden sind.

2. Längsschneideinrichtung nach Anspruch 1, **dadurch gekennzeichnet, dass** zwischen jedem Absaugstutzen (07) und der Unterdruckquelle (01) eine Ventilanordnung (03; 23; 26) angebracht ist, die eine Mehrzahl von Schaltzuständen aufweist und dass eine Steuereinrichtung (04) zum zyklischen Umschalten zwischen den Schaltzuständen der Ventilanordnung (03) angeordnet ist.

3. Längsschneideinrichtung nach Anspruch 2, **dadurch gekennzeichnet, dass** die Steuereinrichtung (04) zeitgesteuert ist.

4. Längsschneideinrichtung nach Anspruch 2, **dadurch gekennzeichnet, dass** die Ventilanordnung (03) eine Mehrzahl von Sperrschiebern (03-1; 03-2; 03-3; 03-4) umfasst.

5. Längsschneideinrichtung nach Anspruch 2, **dadurch gekennzeichnet, dass** die Ventilanordnung (23; 36) einen zylindrischen Hohlraum mit einer Mehrzahl von am Umfang des Hohlraums verteilten Einlassöffnungen (26; 37) und einer Auslassöffnung (27; 43) und eine in dem Hohlraum drehbare zylindrischen Hülse (28; 39) umfasst, wobei die Hülse (28; 39) eine Durchbrechung (29; 42) aufweist, die im Laufe einer Umdrehung der Hülse (28; 39) sich sukzessive mit den Einlassöffnungen (26; 37) überschneidet.

6. Längsschneideinrichtung nach Anspruch 5, **gekennzeichnet durch** einen Motor (41) zum Drehantreiben der Hülse (39).

7. Längsschneideinrichtung nach Anspruch 6, **dadurch gekennzeichnet, dass** die Hülse (28; 39) in einer Mehrzahl von Positionen verrastbar ist, die jeweils der Überschneidung der Durchbrechung (29; 42) mit wenigstens einer Einlassöffnung (26; 37) entsprechen, und dass die Hülse (28; 39) und der Motor (41) über eine Feder (32) gekoppelt sind, die ein mit der Drehung des Motors wachsendes Drehmoment auf die Hülse (28; 39) ausübt.

8. Längsschneideinrichtung nach einem der Ansprüche 5 bis 7, **dadurch gekennzeichnet, dass** die Durchbrechung (42) schraubenlinienförmig ist.

9. Längsschneideinrichtung nach einem der vorhergehenden Ansprüche, **gekennzeichnet durch** einen Filter (08) zum Filtern der von der Unterdruckquelle (01) angesaugten Luft.

10. Längsschneideinrichtung nach Anspruch 1, **dadurch gekennzeichnet, dass** jeder Absaugstutzen (07) genau einem Schneidelement (13; 14) zugeordnet ist.

11. Längsschneideinrichtung nach Anspruch 1, **dadurch gekennzeichnet, dass** in jedem der Schaltzustände eine gleiche Zahl von Absaugstutzen (07) mit der Unterdruckquelle (01) kommuniziert.

12. Längsschneideinrichtung nach Anspruch 1, **dadurch gekennzeichnet, dass** jeder Absaugstutzen (07) eine einem Schneidelement (13; 14) zugewandt anzuordnende Mündung (18) und ein über die Mündung (18) überstehendes Abstreifelement (21) aufweist.

## Claims

1. Longitudinal cutter with a plurality of cutting elements (13; 14) and an extraction system, with a plurality of extraction nozzles (07), connectable via collector lines (02) to a partial-vacuum source (01), assigned to the cutting elements (13; 14), **characterized in that** each extraction nozzle (07) is arranged under a bottom knife (17) and forms a collecting receptacle for shavings when not in communication with the partial-vacuum source (01) [and in] that groups of of extraction nozzles (07) are cyclically connected to the partial-vacuum source (01).

2. Longitudinal cutter according to Claim 1, **characterized in that** a valve arrangement (03; 23; 26) which has a plurality of switching states is fitted between each extraction nozzle (07) and the partial-vacuum source (01) and **in that** a control unit (04) is arranged for cyclical switching between the switching states of the valve arrangement (03).

3. Longitudinal cutter according to Claim 2, **characterized in that** the control unit (04) is time controlled.

4. Longitudinal cutter according to Claim 2, **characterized in that** the valve arrangement (03) comprises a plurality of shut-off valves (03-1; 03-2; 03-3; 03-4).

5. Longitudinal cutter according to Claim 2, **characterized in that** the valve arrangement (23; 36) comprises a cylindrical chamber with a plurality of inlet openings (26; 37) distributed around the circumference of the chamber and one outlet opening (27; 43) and a cylindrical sleeve (28; 39) rotatable inside the chamber, the sleeve (28; 39) having an aperture (29; 42) which successively overlaps the inlet openings (26; 37) in the course of a revolution of the sleeve (28; 39).

6. Longitudinal cutter according to Claim 5, **characterized by** a motor (41) for driving the sleeve (39) in rotation.

7. Longitudinal cutter according to Claim 6, **characterized in that** the sleeve (28; 39) is snap-engageable in a plurality of positions each corresponding to an overlap of the aperture (29; 42) with at least one inlet opening (26; 37), and **in that** the sleeve (28; 39) and the motor (41) are coupled by a spring (32) which exerts increasing torque on the sleeve (28; 39) as the motor rotates.

8. Longitudinal cutter according to any one of Claims 5 to 7, **characterized in that** the aperture (42) is helical.

9. Longitudinal cutter according to any one of the preceding claims, **characterized by** a filter (08) for filtering the air extracted by the partial-vacuum source (01).

10. Longitudinal cutter according to Claim 1, **characterized in that** each extraction nozzle (07) is assigned to just one cutting element (13; 14).

11. Longitudinal cutter according to Claim 1, **characterized in that** an equal number of extraction nozzles (07) are in communication with the partial-vacuum source (01) in each of the switching states.

12. Longitudinal cutter according to Claim 1, **characterized in that** each extraction nozzle (07) has a mouth (18) turned towards a cutting element (13; 14) and a stripper element (21) jutting out above the mouth (18).

## Revendications

1. Dispositif de découpage longitudinal, comprenant une pluralité d'éléments de coupe (13;14) et un dispositif d'aspiration, avec une pluralité de tubulures d'aspiration (07) associée aux éléments de coupe (13;14), susceptibles d'être reliées à une source de vide (01) par des conduites collectrices (02), **caractérisé en ce que** chaque tubulure d'aspiration (07) est respectivement disposée sous une lame inférieure (17) et, en état ne communiquant pas avec la source de vide (01), forme un récipient de captage pour les copeaux, **en ce que** des groupes de tubulures d'aspiration (07) sont reliés cycliquement à la source de vide (01).

2. Dispositif de découpage longitudinal selon la revendication 1, **caractérisé en ce qu'**entre chaque tubulure d'aspiration (07) et la source de vide (01) est monté un agencement à soupape (03;23;26) présentant une pluralité d'états de commutation, et **en ce qu'**un dispositif de commande (04) est disposé pour produire une commutation cyclique entre les états de commutation de l'agencement de soupape (03).

3. Dispositif de découpage longitudinal selon la revendication 2, **caractérisé en ce que** le dispositif de commande (04) est soumis à une commande temporelle.

4. Dispositif de découpage longitudinal selon la revendication 2, **caractérisé en ce que** l'agencement de soupape (03) comprend une pluralité de registres ou vannes d'isolation (03-1 ;03-2;03-3;03-4).

5. Dispositif de découpage longitudinal selon la revendication 2, **caractérisé en ce que** l'agencement à la soupape (23;36) comprend un espace creux cylindrique avec une pluralité d'ouvertures d'admission (26;37) réparties sur la périphérie de l'espace creux, et une ouverture d'échappement (27;43) et une douille (28;39) cylindrique, susceptible de tourner dans l'espace creux, la douille (28;39) présentant un passage (29;42) qui au cours de la rotation de la douille (28;39) recouvre successivement les ouvertures d'admission (26;37).

6. Dispositif de découpage longitudinal selon la revendication 5, **caractérisé par** un moteur (41) servant à l'entraînement en rotation de la douille (39).

7. Dispositif de découpage longitudinal selon la revendication 6, **caractérisé en ce que** la douille (28;39) peut être encliquetée en une pluralité de positions, correspondant chacune au recouvrement du passage (29;42) avec au moins une ouverture d'admission (26;37), et **en ce que** la douille (28;39) et le moteur (41) sont couplés par un ressort (32) exerçant sur la douille (28;39) un couple allant en augmentant avec la rotation du moteur.

8. Dispositif de découpage longitudinal selon l'une des revendications 5 à 7, **caractérisé en ce que** le passage (42) est à forme hélicoïdale.

9. Dispositif de découpage longitudinal selon l'une des revendications précédentes, **caractérisé par** un filtre (08), pour filtrer l'air aspiré par la source de vide (01).

10. Dispositif de découpage longitudinal selon la revendication 1, **caractérisé en ce que** chaque tubulure d'aspiration (07) est associée précisément à un élément de couple (13;14).

11. Dispositif de découpage longitudinal selon la revendication 1, **caractérisé en ce que**, à chacun des états de commutation, un nombre identique de tubulures d'aspiration (07) communique avec la source de vide (01).

12. Dispositif de découpage longitudinal selon la revendication 1, **caractérisé en ce que** chaque tubulure d'aspiration (07) présente une embouchure (18), à disposer de façon tournée vers l'élément de couple (13 ;14), et un élément de raclage (21) en saillie sur l'embouchure (18).
